(19) **Europäisches Patentamt European Patent Office Office européen des brevets**

(11) **EP 2 242 552 B1**

(12) **FASCICULE DE BREVET EUROPEEN**

(45) Date de publication et mention de la délivrance du brevet:
**02.04.2014 Bulletin 2014/14**

(21) Numéro de dépôt: **09718030.1**

(22) Date de dépôt: **21.01.2009**

(51) Int Cl.:
**A63H 27/133** *(2006.01)*    **A63H 30/04** *(2006.01)*

(86) Numéro de dépôt international:
**PCT/FR2009/000060**

(87) Numéro de publication internationale:
**WO 2009/109711 (11.09.2009 Gazette 2009/37)**

(54) **PROCÉDÉ DE PILOTAGE D'UN DRONE À VOILURE TOURNANTE AVEC STABILISATION AUTOMATIQUE EN VOL STATIONNAIRE**

VERFAHREN ZUR FÜHRUNG EINER DREHFLÜGELDROHNE MIT AUTOMATISCHER FLUGSTABILISIERUNG IM SCHWEBEZUSTAND

METHOD FOR PILOTING A ROTARY-WING DRONE WITH AUTOMATIC HOVERING-FLIGHT STABILISATION

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **13.02.2008 FR 0800768**

(43) Date de publication de la demande:
**27.10.2010 Bulletin 2010/43**

(73) Titulaire: **Parrot**
**75010 Paris (FR)**

(72) Inventeurs:
• **SEYDOUX, Henri**
  **F-75017 Paris (FR)**
• **LEFEBURE, Martin**
  **F-92400 Courbevoie (FR)**

• **CALLOU, François**
  **F-75009 Paris (FR)**
• **JONCHERY, Claire**
  **F-75011 Paris (FR)**
• **LANFREY, Jean-Baptiste**
  **F-92250 La Garenne-colombes (FR)**

(74) Mandataire: **Dupuis-Latour, Dominique**
  **Bardehle Pagenberg**
  **10, boulevard Haussmann**
  **75009 Paris (FR)**

(56) Documents cités:
**EP-A- 0 604 252    EP-A- 0 631 109**
**WO-A-01/87446    FR-A- 2 447 011**
**US-A- 4 671 650    US-A1- 2005 165 517**

**Description**

La présente invention concerne un procédé de stabilisation automatique en vol stationnaire d'un drone à voilure tournante. Elle concerne égale-ment un procédé de pilotage de ce drone.

L'invention trouve une application particulièrement avantageuse dans le domaine des jouets radiocommandés pouvant être utilisés par des enfants, notamment dans des environnements d'intérieur, comme une pièce d'une maison ou d'un appartement, par exemple.

On entend ici par drone à voilure tournante toutes les formules d'hélicoptères connues, à savoir la formule classique mono-rotor avec rotor anti-couple, la formule tandem à birotor banane, la formule "Kamof" à rotors coaxiaux contrarotatifs, et la formule quadricoptère, ou quadri-rotor, à quatre rotors à pas fixe, etc.

Le drone dispose d'un ordinateur de bord et d'une centrale inertielle équipée de nombreux capteurs, tels que gyroscopes ou gyromètres, accéléromètres, altimètres, tubes de Pitot, récepteurs GPS, etc.

Il convient d'abord de rappeler en quoi consiste le pilotage d'un engin à voilure tournante. On prendra comme exemple les phases de décollage, d'atterrissage, de vol stationnaire et de vol en translation.

Pour le décollage, l'effet de sol modifie de manière importante les réactions du vol du fait que la colonne d'air entraînée par le rotor principal ne peut pas circuler librement, mais est déviée par le sol. Les performances du rotor sont donc différentes selon l'altitude de l'hélicoptère. Un coussin d'air à plus forte pression étant créé près du sol, l'engin a tendance à décoller facilement et requiert un réglage différent des gaz pour le maintenir en vol stationnaire près du sol. Des effets d'oscillations existent aussi en-tre le sol et les différents tourbillons générés par le rotor.

En vol stationnaire intervient la stabilisation de l'hélicoptère. Le centre de gravité de l'engin étant variable, après le décollage le pilote doit effectuer comme sur un avion des réglages de compensation (ci-après désignés par l'appellation courante de "trim") de manière que les commandes en position neutre n'aient pas l'effet de faire monter ou descendre l'engin. Lors de l'atterrissage, les gaz doivent compenser l'effet de sol et la grande variation du rendement du rotor près du sol. Ils doivent aussi être pilotés de manière fine pour assurer un atterrissage doux.

Le vol stationnaire est délicat à obtenir. Il faut tout à la fois asservir la puissance du rotor pour conserver une altitude constante, compenser le couple du rotor principal et garder au neutre le pas cyclique pour ne pas dévier à gauche ou à droite.

Au delà de la coordination de toutes les commandes, il faut aussi compenser les effets externes, tels que vent continu ou en rafales.

Maintenir un bon vol stationnaire est très difficile pour un pilote d'hélicoptère novice. Lorsque le point d'équilibre est obtenu, il n'est jamais parfait, il faut aussi très légèrement et en permanence effectuer le "trimming", c'est-à-dire revenir au point fixe en corrigeant les infimes variations de translation dans l'un des axes.

Enfin, la mécanique du vol en translation est différente des autres phases discutées. Lorsque l'on avance, la force centrifuge en virage doit être compensée, comme dans un vélo ou un avion, en penchant l'engin.

Pour un hélicoptère classique un autre problème s'ajoute lié au fait que la pale montante du rotor a une portance plus importante que la pale descendante. Ceci doit être compensé par le pas cyclique de l'engin.

On comprend ainsi toutes les difficultés que représente le pilotage d'un hélicoptère. Ces difficultés sont encore accrues lorsqu'il s'agit d'un modèle réduit radiocommandé pour lequel l'opérateur n'a aucun retour d'effort. Il doit seulement se contenter de voir l'engin et apprécier sa position dans l'espace. Il faut pour cela une très bonne connaissance de la physique du vol pour interpréter cette position dans l'espace et comprendre quelles actions doivent être effectuées pour atteindre le point d'équilibre.

Il est donc très délicat pour une personne non entraînée de stabiliser un drone à voilure tournante à l'aide de classiques commandes à leviers jouant sur les gaz, le roulis, le tangage et le lacet.

D'autre part, un apprentissage sur simulateur prend plusieurs heures, ce qui interdit le pilotage de tels engins à la plupart des personnes. Par ailleurs, même pour celles qui se seraient entraînées sur simulateur ou qui pratiquent régulièrement le pilotage radiocommandé de tels aéronefs, il existe des risques de casse lorsque le drone évolue dans un environnement confiné.

La difficulté provient du fait qu'en l'absence de commande manuelle experte ou d'un asservissement spécifique, ce type d'aéronef est instable. En effet, l'équilibrage des forces en présence que sont la poussée de la voilure et la force de gravité est difficile à réaliser de manière précise et permanente. En outre, la dynamique de vol est complexe car elle relie l'accélération, en plus des forces externes, aux vitesses linéaires et angulaires de l'aéronef et à la poussée de sa voilure.

Les capteurs inertiels tels que les accéléromètres et les gyromètres dont sont pourvus les drones permettent effectivement de mesurer les vitesses angulaires et les angles d'attitude d'un aéronef avec une certaine précision. Ils peuvent donc être avantageusement utilisés pour asservir dynamiquement la direction de la poussée de l'aéronef dans la direction opposée à celle de la gravité. Cependant, une difficulté survient du fait que ces mesures sont effectuées dans le repère des capteurs et qu'il reste généralement une correction angulaire à effectuer pour les replacer dans le repère des actionneurs. De plus, le centre de gravité réel peut-être décalé par rapport au centre de gravité théorique.

Or, c'est en ce point que l'on cherche à équilibrer les forces appliquées à l'aéronef. Ces écarts entre théorie et réalité peuvent être corrigés avec les angles dits "de trim". Ce "trim", ou stabilisation, peut être effectué par asservissement en vitesse horizontale nulle car l'aéronef accélère systématiquement dans la direction liée à l'erreur de trim.

Ainsi, lors d'une phase de trim ou pour l'établissement du vol stationnaire, le problème consiste à annuler la vitesse linéaire de l'aéronef par des asservissements adaptés des actionneurs.

Pour cela, il est nécessaire d'avoir au moins une indication de la direction et de l'amplitude de la vitesse de déplacement horizontal. Malheureusement, les accéléromètres à bas coût présentent généralement un biais variable empêchant de remonter à la vitesse linéaire de l'aéronef avec une précision suffisante.

Un premier but de l'invention est de remédier à cette difficulté, en proposant un moyen efficace et économique d'acquérir la vitesse horizontale du drone, afin de permettre la stabilisation automatique de celui-ci dans le plan horizontal en vol stationnaire.

Essentiellement, l'invention propose d'utiliser la caméra vidéo dont est déjà pourvu le drone (pour le pilotage à vue et la reconnaissance de la scène face au drone) pour déduire la direction et l'amplitude de la vitesse linéaire de l'aéronef à l'aide du mouvement de formes détectées et suivies entre les images successives.

Une caméra de vision est par exemple décrite dans le WO 01/87446 A1, qui divulgue un drone équipé d'une "micro-caméra" dont les images sont transmises à un pilote distant, et qui est utilisée exclusivement pour former une image de la scène, notamment pour la téléinspection de composants ou d'ouvrages situés en hauteur et difficiles d'accès. Cette micro-caméra n'a d'autre but que d'afficher une image, il n'est jamais suggéré d'utiliser cette image à d'autres fins, *a fortiori* pour des fonctions de stabilisation du drone, cette stabilisation étant assurée par effet gyroscopique au moyen d'un volant d'inertie embarqué par le drone.

Le point de départ de l'invention est en effet l'utilisation d'une caméra de vision préexistante, typiquement une caméra grand-angle, pointant vers l'avant de l'aéronef et délivrant une image de la scène vers laquelle se dirige l'aéronef. Cette image, initialement prévue pour le pilotage à vue par un pilote déporté, sera utilisée pour reconstruire une information de vitesse horizontale de l'aéronef, à partir des transformations successives de l'image de la scène captée par la caméra.

Il existe certes des drones utilisant des caméras pour leur stabilisation, comme cela est par exemple décrit dans le US 2005/0165517 A1. Ce document divulgue un système de pilotage et de stabilisation d'un aéronef utilisant, entre autres, une caméra ou un ensemble de caméras. Mais ces caméras sont des caméras spécialisées, et en outre elle sont pointées vers le sol. Les changements d'attitude de l'aéronef sont évalués afin de stabiliser celui-ci selon les divers axes, les déplacements étant mesurés par une technologie comparable à celle utilisée avec les souris optiques pour ordinateurs.

L'un des buts de l'invention est, à l'opposé, d'éviter le recours à une caméra spécialisée, en déduisant la direction et l'amplitude de la vitesse linéaire du drone à partir du déplacement de formes détectées et suivies entre les images successives.

Cette approche différente exige, certes, une résolution (en nombre de pixels) très supérieure à ce qui est nécessaire avec la technique décrite par le document US 2005/0165517 A1, mais dans la mesure où la caméra existe déjà pour une autre fonction, cette condition n'est pas un inconvénient.

L'invention a ainsi pour but de pouvoir réaliser le trim et le vol stationnaire à l'aide de capteurs conventionnels à bas coût tels qu'accéléromètres, gyromètres et télémètre à ultrasons, avec la caméra vidéo préexistante, et ceci de manière complètement autonome même dans un environnement d'intérieur tel qu'une pièce d'une maison ou d'un appartement.

Un autre but de l'invention est de proposer un procédé qui permettrait ainsi à des personnes non initiées au pilotage, notamment les enfants, de pouvoir néanmoins piloter un drone à voilure tournante sans avoir à agir directement sur les paramètres de vol, comme la puissance des gaz, au moyen de commandes traditionnelles à leviers, au profit d'un pilotage intuitif des déplacements horizontaux et verticaux.

Les buts ci-dessus sont atteints, conformément à l'invention, grâce à un procédé de pilotage d'un drone à voilure tournante comprenant des étapes consistant à : équiper le drone d'un télémètre et d'une caméra vidéo ; acquérir l'altitude du drone par rapport au sol au moyen du télémètre ; acquérir la vitesse horizontale du drone ; et stabiliser automatiquement le drone en vol stationnaire par asservissement de la force de poussée verticale du drone de manière à stabiliser l'altitude acquise par le télémètre, et asservissement de la force de poussée horizontale du drone de manière à annuler la vitesse horizontale.

De façon caractéristique de l'invention, la caméra vidéo est une caméra à visée frontale pointant vers l'avant du drone, et la vitesse horizontale du drone est acquise à partir d'une pluralité d'images vidéo saisies par ladite caméra à visée frontale.

De façon avantageuse, le procédé de l'invention comprend en outre des opérations consistant à : définir des fonctions élémentaires de pilotage, chaque fonction élémentaire de pilotage étant apte à déterminer des paramètres de vol à exécuter par un ensemble d'actionneurs dudit drone de manière à réaliser ladite fonction élémentaire de pilotage ; fournir à un utilisateur des moyens d'activation desdites fonctions élémentaires de pilotage ; et pour l'utilisateur, piloter le drone en actionnant lesdits moyens d'activation des fonctions élémentaires de pilotage, l'absence d'activation d'une fonction quelconque plaçant automatiquement le drone en vol stationnaire stabilisé.

L'invention prévoit en particulier que lesdites fonctions élémentaires de pilotage comprennent les actions suivantes : monter ; descendre ; tourner à droite ; tourner à gauche ; avancer ; reculer ; la translation horizontale gauche ; la translation horizontale droite.

Les moyens d'activation peuvent être constitués par des touches d'un boîtier de pilotage, ou par des tracés d'un stylet sur une surface sensible d'un boîtier de pilotage.

Le procédé de pilotage selon l'invention repose ainsi sur une redéfinition complète des manoeuvres et des commandes de pilotage : les manoeuvres de pilotage qui, dans l'art antérieur, étaient constituées par différentes actions à effectuer par l'opérateur sur des commandes à leviers afin de modifier certains paramètres de vol, comme le pas collectif, le pas cyclique, le pas du rotor anti-couple, la puissance du moteur, sont remplacées par des fonctions élémentaires globales complètement intuitives pour l'opérateur. Ces fonctions sont exécutées par l'ordinateur de bord en commandant, à la place de l'opérateur, les actionneurs du drone appropriés pour modifier automatiquement en conséquence les paramètres de vol concernés.

Par exemple, pour réaliser la fonction "monter", il suffit à l'utilisateur d'activer cette fonction en appuyant sur la touche correspondante de son boîtier de pilotage, sans avoir à commander lui-même la puissance du moteur. C'est l'ordinateur de bord qui le fait automatiquement, de même qu'il modifie le pas collectif et corrige la stabilité en réglant le rotor anti-couple.

Les commandes de pilotage à leviers habituellement utilisées sont supprimées et remplacées par des moyens d'activation de fonctions beaucoup plus familiers, en particulier pour des enfants, à savoir des touches analogues à celles qui existent déjà sur les consoles de jeu vidéo, ou des tracés de stylet sur une surface sensible.

Une caractéristique importante de l'invention est que le pilotage du drone s'effectue à partir d'une fonction élémentaire de base qui est le vol stationnaire stabilisé, cette fonction étant réalisée très simplement en ne sollicitant aucun moyen d'activation particulier, touche ou tracé. En l'absence de toute activation de touche ou de tracé, le drone se met automatiquement en vol stationnaire et stable. Plus précisément, lorsque l'utilisateur lâche toutes les commandes, l'ordinateur de bord organise les mouvements de translation pour passer de l'état du drone au moment du lâcher de commandes à un état de vol stationnaire. Dès que le vol stationnaire est réalisé, et tant que l'utilisateur n'active aucune fonction élémentaire disponible sur son boîtier, le drone reste en vol stationnaire.

En définitive, au lieu de rechercher un point d'équilibre à chaque phase de pilotage, ce qui nécessite un long apprentissage, un enfant pilote son drone de points d'équilibre en points d'équilibre.

Il faut remarquer que certaines fonctions élémentaires peuvent avoir un effet légèrement différent selon le mode de pilotage envisagé.

C'est ainsi que la fonction "tourner à gauche" par exemple fait tourner le drone autour de son axe principal lorsqu'il est en mode point fixe. Par contre, dans le mode translation obtenu en actionnant simultanément la touche "avancer" ou "reculer", la fonction "tourner à gauche" a pour effet de faire pencher l'engin à l'intérieur du virage et de le faire tourner progressivement autour de l'axe du virage.

Avantageusement, les moyens d'activation sont des moyens multi-actions aptes à enclencher, régler et stopper les fonctions élémentaires de pilotage associées.

Si l'on considère par exemple la fonction élémentaire "monter", le fait d'appuyer sur la touche correspondante du boîtier de commande fait passer le drone en mode de translation verticale à vitesse constante. Si l'opérateur relâche et ré-appuie immédiatement sur la même touche, la vitesse verticale est augmentée d'un pas. Enfin, si la touche est complètement relâchée, la vitesse de translation verticale est annulée.

L'invention prévoit en outre que lesdits moyens d'activation comprennent également des moyens d'activation de séquences automatiques. En particulier, lesdites séquences automatiques comprennent le décollage et l'atterrissage du drone.

Dans ce contexte, il est à noter que des séquences peuvent aussi être lancées automatiquement dans des conditions particulières. Par exemple, la perte de liaison radio peut entraîner le passage en vol stationnaire et le retour au point de départ en utilisant des coordonnées GPS pour faire le trajet en sens inverse.

On a compris de ce qui précède que le vol stationnaire stabilisé constitue la base même du procédé de pilotage selon l'invention. Aussi, afin d'obtenir un engin très simple à piloter, il convient de pouvoir stabiliser automatiquement le drone en vol stationnaire sans que l'utilisateur n'ait à agir directement sur les paramètres de vol que sont la puissance des gaz, le roulis et le tangage, ce que permet précisément le système d'acquisition et de stabilisation de la vitesse horizontale mettant en oeuvre la caméra vidéo à visée frontale pointant vers l'avant du drone.

L'invention couvre également un drone à voilure tournante apte à mettre en oeuvre le procédé exposé ci-dessus, ce drone étant du type comportant : un télémètre et une caméra vidéo ; des moyens pour acquérir l'altitude du drone par rapport au sol au moyen du télémètre ; des moyens pour acquérir la vitesse horizontale du drone ; et un système de stabilisation automatique en vol stationnaire, comprenant des moyens d'asservissement de la force de poussée verticale du drone de manière à stabiliser l'altitude acquise par le télémètre, et des moyens d'asservissement de la force de poussée horizontale du drone de manière à annuler la vitesse horizontale.

Ce drone est remarquable en ce que la caméra vidéo est une caméra à visée frontale pointant vers l'avant du drone, et les moyens pour acquérir la vitesse horizontale du drone sont des moyens pour acquérir cette vitesse à partir d'une pluralité d'images vidéo saisies par ladite caméra à visée frontale.

L'invention concerne également un ensemble de pilotage d'un drone à voilure tournante, cet ensemble de pilotage comportant : un drone tel que ci-dessus, combiné à un boîtier de pilotage comprenant des moyens d'activation de fonctions élémentaires de pilotage, chaque fonction élémentaire de pilotage étant apte à déterminer des paramètres de vol à exécuter par un ensemble d'actionneurs dudit drone de manière à réaliser ladite fonction élémentaire de pilotage, et l'absence d'activation d'une fonction quelconque plaçant automatiquement le drone en vol stationnaire stabilisé au moyen du système de stabilisation automatique en vol stationnaire du drone.

L'invention concerne enfin, en tant que tel, un boîtier de pilotage tel que ci-dessus.

On va maintenant décrire un exemple de mise en oeuvre du dispositif de l'invention, en référence aux dessins annexés.

La figure 1 est un diagramme représentant une procédure de trim automatique.

La figure 2 est un schéma d'un circuit de calcul automatique du trim, activable à l'aide d'un "timer".

La figure 3 est un schéma de calcul automatique permanent du trim.

La figure 4 est un schéma d'un correcteur proportionnel-dérivée d'asservissement en altitude.

La figure 5 est un schéma d'un circuit d'asservissement en angle d'assiette.

La figure 6 est un schéma en vue de dessus des actionneurs d'un quadri-rotor.

La figure 7 est un circuit d'asservissement en cap.

La figure 8 est un schéma montrant le déplacement avant avec tournant du quadri-rotor de la figure 6.

La figure 9 est un diagramme représentant l'initialisation des points d'intérêt dans un procédé d'extraction de données visuelles pour le trim automatique et le vol stationnaire.

La figure 10 est un diagramme représentant une procédure de détection et de suivi de points d'intérêt.

La figure 11 est un diagramme représentant l'approche multi-résolution du suivi des points d'intérêt.

La figure 12 est un diagramme de calcul de la vitesse du drone.

Comme cela a été mentionné plus haut, les fonctions élémentaires de pilotage selon le procédé conforme à l'invention peuvent être activées au moyen de touches analogues à celles figurant habituellement sur les consoles de jeux vidéo.

Parmi ces touches, on trouve :

- des touches de commande directionnelle haut (Dh), bas (Db), gauche (Dg) et droite (Dd),
- des touches de commande d'action haut (Ah), bas (Ab), gauche (Ag) et droite (Ad),
- des touches placées de chaque côté de la console, appelées aussi gâchettes, gauche (L) et droite (R),
- des boutons "Start" et "Select".

On peut alors établir la correspondance suivante entre touches d'activation et fonctions élémentaires :

| | |
|---|---|
| Dh | Avancer |
| Db | Reculer |
| L | Pivoter à gauche |
| R | Pivoter à droite |
| Dg | Translation vers la gauche |
| Dd | Translation vers la droite |
| Dg+Dh | Virage en vélo antihoraire |
| Dd+Dh | Virage en vélo horaire |
| Ah | Monter |
| Ab | Descendre |

À ces fonctions élémentaires s'ajoutent les séquences automatiques de décollage et d'atterrissage obtenues par la touche "Start" par exemple.

On remarquera que les fonctions "Tourner à gauche" et "Tourner à droite" ont été dédoublées respectivement en "Pivoter à gauche" et "Virage en vélo antihoraire" d'une part, et "Pivoter à droite" et "virage en vélo horaire" d'autre part, la fonction "Pivoter" s'appliquant en mode vol stationnaire et la fonction "Virage en vélo" s'appliquant au mode translation.

Bien entendu, toute autre règle de correspondance peut être établie sans sortir du cadre de l'invention.

À titre indicatif, on donne ci-après une correspondance possible entre les fonctions élémentaires et des tracés formés avec un stylet sur une surface sensible :

| | |
|---|---|
| Tracé du centre vers le haut | Avancer |
| Tracé du centre vers le bas | Reculer |
| Tracé du centre vers la gauche | Translation vers la gauche |
| Tracé du centre vers la droite | Translation vers la droite |
| Tracé circulaire antihoraire | Pivoter à gauche |
| Tracé circulaire horaire | Pivoter à droite |
| Tracé du centre vers le coin haut gauche | Virage vélo antihoraire |
| Tracé du centre vers le coin haut droit | Virage vélo horaire |
| Tracé du bas vers le haut | Monter/décoller |
| Tracé du haut vers le bas | Descendre |
| Tracé du haut vers le bas, puis horizontal | Atterrir |

En théorie, un aéronef, notamment un drone à voilure tournante, évoluant dans une masse d'air statique nécessite une commande d'attitude nulle pour rester en vol stationnaire, c'est-à-dire en assiette plate et sans déplacement linéaire. En réalité, le centre de gravité peut être décalé par rapport à la position des capteurs. Or, la bonne connaissance du centre de gravité est primordiale pour équilibrer les forces appliquées à l'engin. De plus, le plan de pose des capteurs peut être différent du plan de poussée des actionneurs. Enfin, les dispersions mécaniques font que les poussées des moteurs sont inégales. Pour remédier à ces imperfections, il est nécessaire de biaiser la consigne ou la mesure d'attitude de l'aéronef qui la maintient en assiette plate.

C'est ce que l'on réalise avec la fonction de stabilisation ou "trim".

Le principe du trim automatique consiste à régler les angles de trim en réalisant le vol stationnaire à l'aide des mesures issues de la vision par une caméra vidéo, des mesures inertielles et des mesures télémétriques.

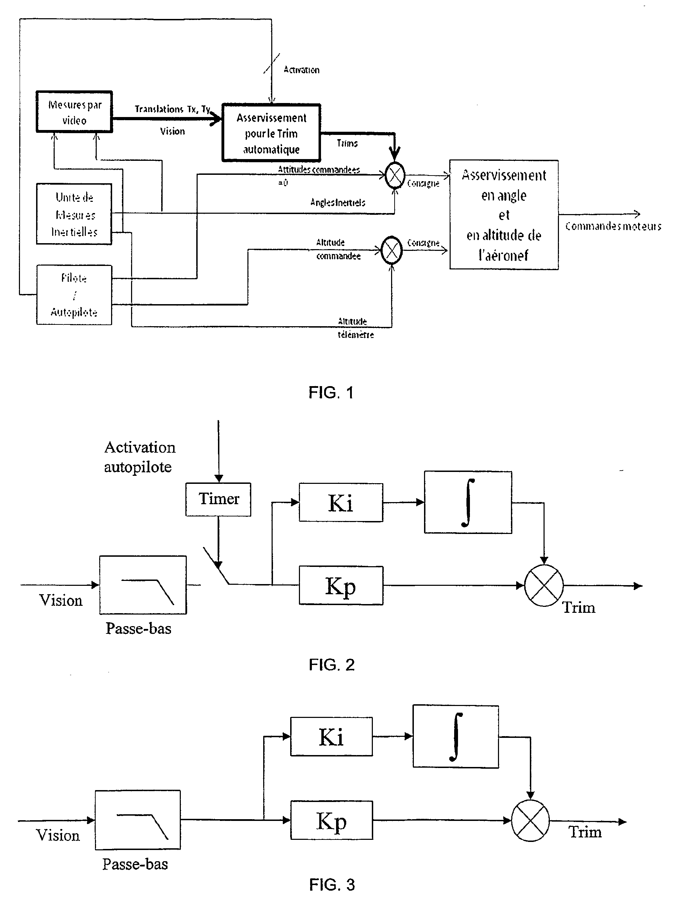

La procédure de trim consiste à asservir le drone en vitesse linéaire horizontale nulle en X et Y à l'aide des mesures fournies par une caméra vidéo, et en vitesse verticale selon Z à l'aide des mesures fournies par un télémètre, à ultrasons par exemple. La seule action disponible sur l'aéronef est son inclinaison pour contrer le déplacement. Un premier niveau d'asservissement réalisé à l'aide des mesures inertielles permet de placer l'aéronef à 0° d'angle d'attitude avec l'horizontale. Les mouvements qui subsistent sont donc dus à une erreur de trim que l'on va estimer avec la vision, conformément au schéma de la figure 1.

Tout d'abord, il est difficile d'avoir une donnée de translation quantifiée lorsque l'on réalise des mesures à l'aide de la vision, notamment à cause des problèmes d'estimation de profondeur des points d'intérêt suivis. De plus, les données dépendent de l'environnement visuel et peuvent donner des résultats discontinus. En pratique, la vision fournit d'abord une information sur l'existence d'un déplacement ou non en détectant que la vitesse linéaire est supérieure à un seuil S (d'environ 10 cm/s par exemple), puis, et dans ce cas seulement, la direction de déplacement. Cette direction peut être arrondie à $\pi/4$. Un filtrage passe-bas permet de lisser les données et de s'affranchir des problèmes de perte de suivi temporaire. La figure 2 montre le schéma d'un circuit d'asservissement de l'aéronef en vitesse linéaire. La loi de commande réalisée comporte deux composantes, à savoir une composante dynamique qui permet de contrer le déplacement de l'aéronef, c'est la partie proportionnelle, et une composante intégrale qui permet de mémoriser le sens du déplacement moyen de l'aéronef et la commande nécessaire pour contrer ce mouvement. En effet, la seule composante intégrale qui calcule le trim proprement dit n'est pas suffisante pour stopper un déplacement, le temps de réponse étant trop long. Il est donc nécessaire de réaliser une commande proportionnelle qui donne des impulsions s'opposant au mouvement.

Comme cela a été détaillé précédemment, les causes du trim sont principalement mécaniques et ont une faible variation temporelle. En forçant les entrées à zéro, la partie proportionnelle reste nulle tandis que la partie intégrale garde une valeur constante. Il est donc possible de mémoriser la valeur moyenne de trim commandé. Cette valeur sera constante au cours d'un vol de courte durée. De plus, cela permet de s'affranchir de la vision qui prend beaucoup de temps CPU. Le trim automatique est donc activé lors de la procédure de décollage, il est stoppé au bout d'un temps prédéfini par un temporisateur ou "timer". En simulation sur l'aéronef choisi, un trim de 2° d'angle environ est réalisé en 5 secondes et il faut 15 secondes pour réaliser un trim de 4° d'angle.

La procédure de vol stationnaire consiste à asservir l'aéronef en vitesse linéaire nulle en X et Y à l'aide des mesures fournies par la vision, et en Z à l'aide des mesures fournies par le télémètre. Le vol stationnaire est en fait un trim automatique réalisé en continu. Seule la désactivation par le temporisateur ou "timer" est supprimée par rapport à l'asservissement précédent illustré à la figure 2. C'est ce que montre la figure 3.

On va maintenant décrire en détail comment sont réalisés les déplacements verticaux du drone à voilure tournante conforme à l'invention.

Deux situations sont possibles pour le contrôle vertical de l'aéronef. Si les données d'altitude sont indisponibles, l'assistance au pilotage n'est pas enclenchée et l'utilisateur contrôle directement la puissance moteur de l'engin par l'intermédiaire des touches "Ah" et "Ab". En revanche, lorsque des données d'altitude sont disponibles, l'utilisateur utilise des commandes simples du type "décollage", "atterrissage" à l'aide de la touche "Start", "monter de x cm", "descendre de x cm" à l'aide des touches "Ah" et "Ab". Le logiciel embarqué interprète ces commandes et asservit l'aéronef en altitude.

Le décollage automatique est réalisé en augmentant les gaz progressivement selon une pente prédéterminée jusqu'à ce que l'appareil décolle. Une fois que l'altitude mesurée est supérieure à un seuil, on mémorise la valeur de gaz ainsi atteinte. On asservira ensuite l'aéronef autour de cette valeur de référence.

L'atterrissage automatique s'effectue en deux phases. Tout d'abord, on diminue progressivement la commande de gaz moteur pour faire descendre l'appareil en douceur. Une fois une altitude minimum atteinte, il est nécessaire de baisser plus fortement la commande de gaz pour contrer l'effet de sol. Les gaz sont donc diminués selon une pente plus importante afin de poser rapidement l'appareil. Dès que l'appareil est posé, les gaz sont coupés.

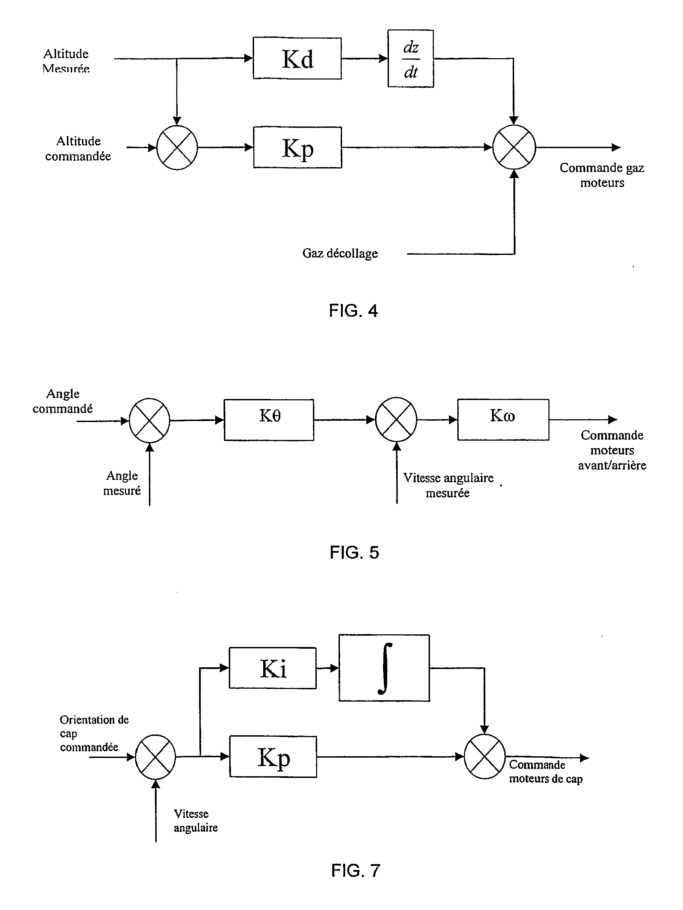

Pendant le vol à proprement parler, une fois le décollage terminé, l'utilisateur a deux commandes verticales disponibles : "monter de x cm" ou "descendre de x cm". Le logiciel embarqué asservit l'altitude de l'aéronef autour de cette altitude de consigne. L'asservissement est réalisé à l'aide du correcteur proportionnel-dérivée (PD) montré sur la figure 4. Le système physique correspond grossièrement à une double dérivation de l'altitude :

$$m.\frac{dz}{dt} = poids + \text{ commande de gaz moteurs}$$

Pour obtenir une réponse à la fois rapide et avec peu de dépassement de la consigne, il est nécessaire de transformer cette équation en équation différentielle du deuxième ordre :

$$az + b\frac{dz}{dt} + c\frac{d^2z}{dt^2} = 0$$

D'où la réalisation d'un correcteur PD dans lequel la composante dérivée est appliquée directement à la mesure (par simplification des équations) afin de ne pas introduire de zéros dans la fonction de transfert en boucle fermée et de n'avoir que deux paramètres de réglage (amortissement, fréquence de coupure).

Lorsque l'aéronef est incliné, la force de poussée n'étant plus verticale, il est nécessaire de la projeter selon la verticale géographique. Il est donc nécessaire de diviser la commande moteur par $\cos\theta.\cos\varphi$, $\theta$ et $\varphi$ étant les angles d'Euler habituels.

S'agissant maintenant des déplacements horizontaux, il est important d'observer que, dans le cas d'un drone à voilure tournante par exemple, l'engin ne possède pas de moyen de propulsion horizontale, mais uniquement une force de poussée verticale $F\_poussée.$ Pour déplacer l'engin, il est donc nécessaire de l'incliner afin d'obtenir une résultante non nulle dans le plan horizontal. En effet, si le plan de poussée fait un angle $\theta$ avec l'horizontale, la force résultant de la poussée dans le plan horizontal sera $F\_poussée.sin(\theta).$

En déplacement en ligne droite, on utilise les mesures de vitesses angulaires fournies par des gyromètres et des mesures d'angle obtenues par fusion des données accélérométriques et de vitesses angulaires. On mesure ainsi les angles d'assiette de l'appareil.

En diminuant la poussée de l'avant par rapport à la poussée arrière, on incline l'appareil et il se déplace vers l'avant. Le principe est le même pour les déplacements arrière et sur les côtés.

L'asservissement choisi représenté sur la figure 5 est un asservissement avec une boucle interne de commande en vitesse angulaire w et une boucle externe de commande en angles d'attitude.

Une pression plus ou moins longue sur les touches avant/arrière "Dh/Db" de la croix directionnelle du boîtier de commande fait avancer ou reculer plus ou moins rapidement le drone en ligne droite.

De même, une pression plus ou moins longue sur les cotés gauche et droit "Dg/Dd" de la croix directionnelle du boîtier de commande déplace le drone latéralement en ligne droite à gauche ou à droite.

Ces pressions peuvent également être substituées par un tracé sur surface sensible. Un tracé du centre vers le haut plus ou moins grand fait déplacer le drone vers l'avant plus ou moins longtemps. Ce principe est applicable aux quatre directions.

Concernant le mouvement de rotation autour de la verticale, celui-ci est réalisé en mesurant la vitesse de rotation du drone autour de l'axe vertical de manière à le faire pivoter sur lui-même et ainsi en contrôler le cap.

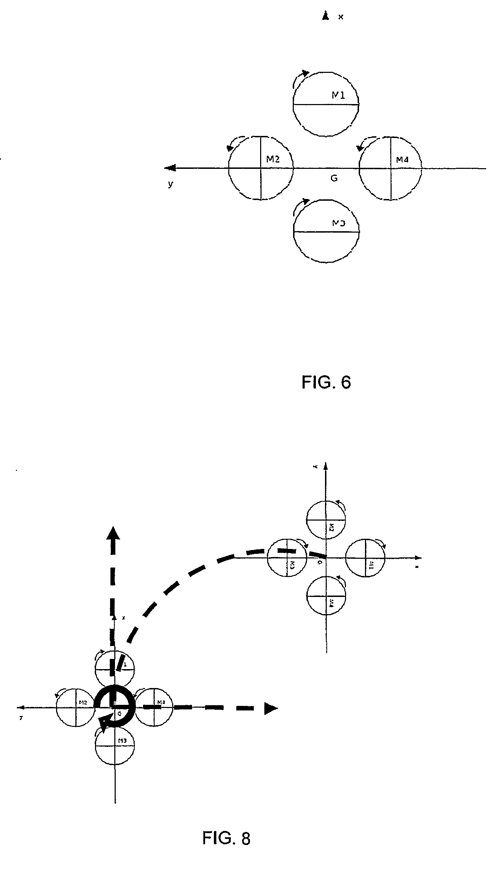

Si l'on prend l'exemple du quadri-rotor de la figure 6 qui possède quatre moteurs à poussée verticale dont deux (M1, M3) qui tournent dans le sens horaire et deux (M2, M4) dans le sens antihoraire, on peut constater que, si l'on diminue la vitesse de rotation des moteurs M1 et M3 par rapport à celle de M2 et M4, le drone pivotera sur lui-même dans le sens horaire. Dans ce cas, seule la mesure de vitesse angulaire est disponible. Pour éviter une trop grande dérive du cap, on utilise le circuit d'asservissement à correcteur proportionnel/intégral de la figure 7.

Par exemple, le contrôle du cap par l'utilisateur peut se faire au moyen des touches "L" et "R" du boîtier de commande. Une pression sur la touche "R" fera pivoter l'engin selon le sens horaire et la touche "L" selon le sens antihoraire.

Sur une surface sensible, un tracé circulaire dans le sens horaire fera pivoter l'engin selon le sens horaire et un tracé circulaire dans le sens antihoraire fera pivoter l'engin selon le sens antihoraire.

Afin que l'appareil pointe toujours dans le sens de déplacement, il y a avantage à ce que le drone pivote sur lui-même lorsqu'il se déplace en avant et latéralement. C'est ce que l'on appelle le déplacement avant avec tournant en vélo. Une pression simultanée sur les touches avant "Dh" et droite "Dd" fera se déplacer l'engin vers l'avant et vers la droite tout en faisant évoluer le cap dans le sens de déplacement.

Un exemple d'un tel déplacement est donné sur la figure 8 dans le cas d'un quadri-rotor.

L'appui simultané sur les touches "Dh" et "Dd" enverra une consigne de déplacement vers l'avant, vers la droite et à vitesse de rotation du cap dans le sens horaire.

De même, une pression sur les touches "Dh" et "Dg" enverra une consigne de déplacement vers l'avant, vers la gauche et à vitesse de rotation du cap dans le sens antihoraire.

Sur une surface sensible, des tracés du centre vers les coins haut gauche et haut droit réalisent la même consigne.

Les asservissements utilisés sont les asservissements présentés aux figures 5 et 7.

On va maintenant expliquer un procédé d'extraction de données visuelles pour le trim automatique et le vol stationnaire.

Une première étape de ce procédé concerne la détection et le suivi de points d'intérêt.

Le principe de la détection consiste à placer des points d'intérêt selon une distribution uniforme dans l'image et à les caractériser par des gradients significatifs.

En pratique, dans une fenêtre carrée de taille fixée autour de chaque point d'intérêt, on recherche des gradients de norme supérieure à un seuil.

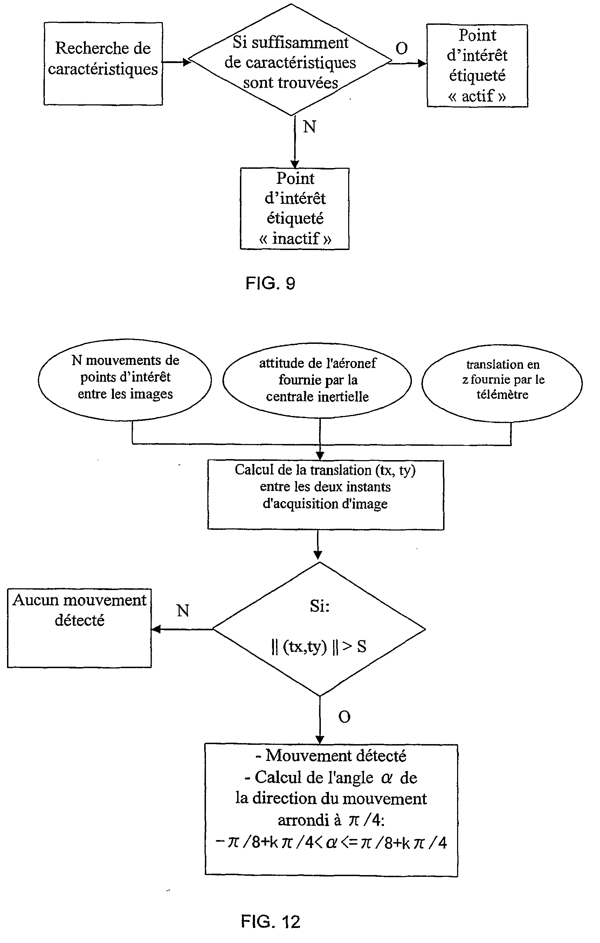

Si la norme du gradient est très supérieure au seuil, on attribue à ce gradient un poids plus important dans la liste des caractéristiques du point d'intérêt, afin d'avantager les contrastes très significatifs. Si un nombre suffisant de gradients supérieurs au seuil est trouvé, le point d'intérêt est qualifié d'actif : c'est la phase d'initialisation dont un diagramme est représenté sur la figure 9.

Un point d'intérêt inactif est un point d'intérêt à initialiser à l'image suivante, sans pouvoir être suivi. Le suivi d'un point d'intérêt actif dans l'image suivante consiste à rechercher la même distribution de gradients, un certain pourcentage de pertes étant cependant autorisé. En supposant que l'aéronef a peu bougé entre les deux acquisitions, on recherche la distribution à partir de la position précédente du point d'intérêt, en s'en éloignant jusqu'à obtenir la distribution désirée (réussite du suivi) ou jusqu'à atteindre la distance maximale de déplacement autorisée dans l'image (échec du suivi).

À l'issue du suivi, les caractéristiques associées à un point d'intérêt actif correctement suivi ne sont généralement pas recalculées, ce qui limite le temps de calcul. L'initialisation des caractéristiques intervient en effet dans trois cas seulement dans une nouvelle image : si le suivi du point d'intérêt a échoué, si le point d'intérêt était inactif à l'initialisation précédente faute de gradients suffisants, ou si le point d'intérêt a été correctement suivi mais s'est trop éloigné de sa position initiale : il est alors repositionné pour maintenir une distribution uniforme des points d'intérêt.

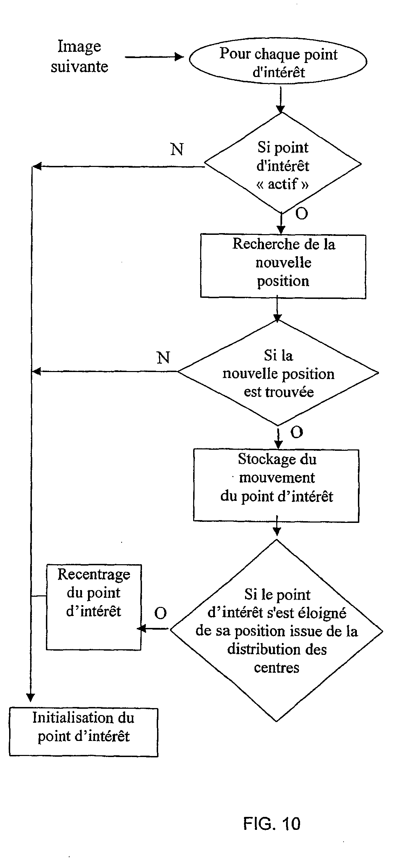

La figure 10 est un diagramme représentant la procédure générale de détection et de suivi des points d'intérêt.

Afin de limiter à la fois le bruit dans les images, dont la qualité peut être souvent considérée comme médiocre, et le temps de calcul du procédé, on n'utilise pas les images originales mais des images de taille réduite d'un facteur 4, obtenues en remplaçant des blocs de taille 2x2 par la moyenne des niveaux de gris de ces blocs. Ces images sont appelées images courantes dans la suite.

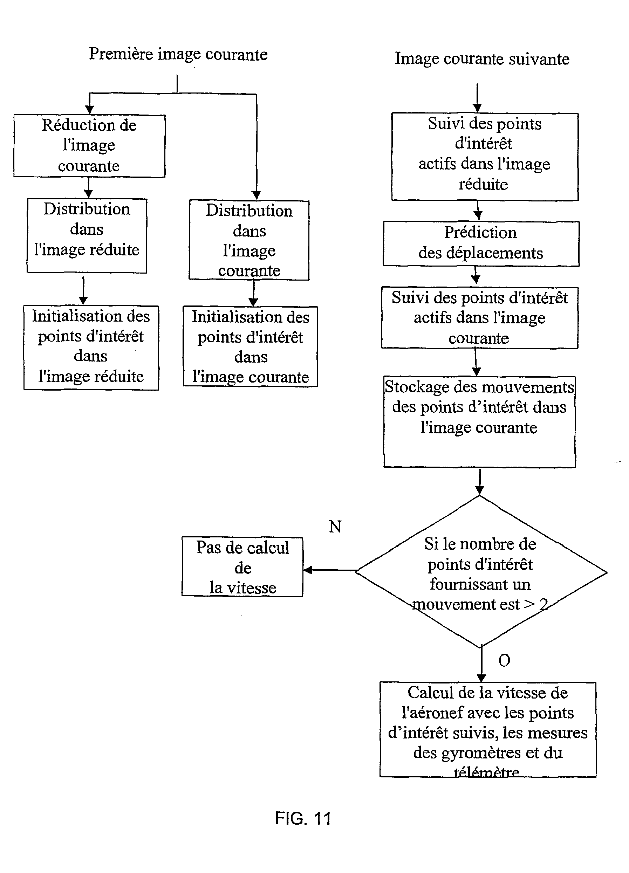

Toujours dans le but d'accélérer les calculs, une approche multi-résolution pour l'estimation du déplacement des points d'intérêt d'une image à l'autre est utilisée. Le diagramme de la figure 11 donne une illustration de cette approche multi-résolution.

Ainsi, l'image courante traitée est de nouveau réduite d'un facteur 4 en faisant la moyenne d'images de taille 2x2. On place et on initialise les points d'intérêt, puis on les suit dans l'image réduite suivante comme décrit précédemment. L'avantage de travailler sur une version grossière de l'image réside dans le fait qu'on n'autorise qu'un très petit déplacement dans l'image et que le suivi des points est alors très rapide. Une fois le suivi des points d'intérêt actifs effectué sur l'image grossière, on utilise l'information de mouvement obtenue pour prédire le déplacement des points d'intérêt sur l'image courante. En pratique, pour chaque point d'intérêt actif dans l'image courante, on recherche le point d'intérêt suivi le plus proche dans l'image réduite, après remise à l'échelle courante de l'image réduite. On en déduit une prédiction du déplacement du point d'intérêt actif. Le suivi est ensuite affiné par la recherche des caractéristiques autour de la position prédite. À nouveau, on n'autorise qu'un faible déplacement pour retrouver les caractéristiques.

La solution de suivi proposée répond aux contraintes suivantes : d'abord, aucun modèle d'objet n'étant utilisé, le procédé s'adapte à tout type d'environnement saisi par la caméra, c'est-à-dire à des scènes éventuellement peu structurées, comprenant peu d'objets ou présentant peu de singularités telles que lignes, arêtes, etc. comme cela est requis par certaines techniques conventionnelles basées sur la reconnaissance des formes. Dans le cas présent, il n'est pas nécessaire que l'image contienne des formes précises, il suffit de pouvoir reconnaître des gradients présents à un niveau supérieur au niveau du bruit.

D'autre part, le suivi étant basé sur des gradients, il est robuste aux changements d'illumination dus notamment aux variations d'éclairage, à l'exposition de la caméra, etc. Enfin, grâce à l'approche multi-résolution et au principe de non-recalcul des caractéristiques lorsque les points d'intérêt sont suivis, la complexité du procédé reste limitée.

Afin d'augmenter le nombre de points d'intérêts suivis, il y a intérêt à tourner et à monter ou descendre l'aéronef pour qu'un nombre suffisant de points d'intérêt soient détectés. Ceci est indispensable pour réaliser dans de bonnes conditions le trim automatique et le vol stationnaire à l'aide de mesures de vitesses linéaires déduites des images de la caméra. Trois méthodes ont été développées qui consistent à :

- amener vers le centre de l'image le centre de gravité des points d'intérêt pondérés par leur âge.
- minimiser une fonction de coût de la distance au centre de la zone de détection des points d'intérêt.
- recentrer vers le centre de l'image des points d'intérêt qui en sont éloignés, si cela est avantageux, sinon on recentre le centre de gravité des points d'intérêt.

En l'absence de points d'intérêt, deux méthodes sont possibles :

- continuer dans la dernière direction choisie.
- attendre quelque temps, puis choisir au hasard la direction, continuer et choisir à nouveau.

Le calcul de la vitesse de l'aéronef entre deux images, à partir du suivi des points d'intérêt, est basé sur les données suivantes :

- la structure de la scène est inconnue,
- le mouvement de l'aéronef entre deux acquisitions d'images est faible, la fréquence d'acquisition étant de 25 images par seconde,
- la centrale inertielle fournit l'attitude de l'aéronef dans l'espace,
- peu de temps CPU est disponible.

Les mouvements des points d'intérêt entre deux images dépendent de la rotation et de la translation de l'aéronef, mais aussi de la distance, appelée profondeur, des points projetés sur le plan de formation des images. La centrale inertielle fournit, à une plus haute fréquence que celle des acquisitions d'images, les angles d'attitude de l'aéronef dans l'espace. En utilisant les angles d'attitude à chaque acquisition d'image, on peut en déduire, connaissant la position et l'orientation de la caméra par rapport à la centrale inertielle, la rotation de la caméra entre les deux acquisitions. Ainsi, on peut supprimer l'effet de la rotation en projetant les points d'intérêt dans un même repère, par exemple celui d'une des deux images. Seule la translation doit donc être estimée.

Après ce traitement et pour N points d'intérêt suivis entre les deux images, on obtient 2N équations reliant les coordonnées des points dans les deux images, les trois composantes de la translation, et la profondeur de chacun des N points projetés dans le repère de la caméra avant le mouvement. L'amplitude de la translation étant très faible et les mouvements des points bruités, au moins à cause de l'échantillonnage sur la grille de pixels, les procédés estimant simultanément les profondeurs des points et la translation fournissent de mauvais résultats. De même, les méthodes basées sur la contrainte épi-polaire nécessitent un grand mouvement pour fournir des résultats corrects. C'est pourquoi on propose une hypothèse sur les profondeurs adaptée à la spécificité de la méthode de suivi. En effet, la méthode suit d'avantage de petites zones planes d'une image à l'autre que des points précis de l'espace. En conséquence, on fait l'hypothèse que la scène filmée appartient à un plan parallèle au plan image et donc que tous les points suivis ont la même profondeur : cette hypothèse est d'autant plus valide que le mouvement est très faible et que les objets filmés sont éloignés de la caméra. Les 2N équations n'ont alors plus que trois inconnues : les trois composantes de la translation ramenée à la profondeur de la scène.

Pour estimer la translation de l'aéronef, on commence par estimer la translation dans la direction de l'axe optique de la caméra, en utilisant les distorsions de formes définies par les points d'intérêt suivis entre les images. Puis, à partir de cette estimation, on calcule les translations dans les directions des axes de l'image par moindres carrés. Enfin, on convertit le vecteur estimé du repère caméra dans le repère fixe de l'espace. Ne connaissant pas la profondeur de la scène dans le repère caméra, la translation est alors estimée à un scalaire près. Il manque l'information de distance entre la scène et la caméra pour estimer non plus seulement la direction de la translation mais aussi son amplitude. Le télémètre peut apporter la mesure de la translation selon l'axe z : on en déduit alors l'amplitude du vecteur de translation estimé.

Afin de faciliter le calcul de la translation soumis à des instabilités numériques, la méthode de suivi et de calcul de la translation est appliquée à des séquences sous-échantillonnées dans le temps. Ainsi, on suit les points d'intérêt et on calcule la vitesse correspondante sur plusieurs sous-séquences extraites d'une séquence originale. Les résultats s'en trouvent améliorés.

Pour calculer la translation, une hypothèse a été considérée en alternative à celle des profondeurs constantes. En effet, la caméra placée sur l'aéronef permettant de visualiser le sol, une hypothèse correspondante sur les profondeurs a été envisagée : on suppose que les points projetés sur le plan image appartiennent au sol, considéré comme plat. Connaissant l'orientation de la caméra dans l'espace et grâce à la position de la caméra sur l'aéronef et à l'attitude de l'aéronef dans l'espace, on peut projeter les points sur une vue du sol et calculer directement la translation dans le repère fixe de l'espace. La connaissance de la translation selon l'axe z facilite alors grandement les calculs. Cependant, pour que les points projetés puissent vérifier cette hypothèse, il faut les positionner dans la partie inférieure de l'image, ce qui limite la chance de les placer sur des contrastes existants, d'autant que la partie inférieure de l'image présente souvent des textures uniformes (moquette, lino...), moins faciles à suivre. C'est pourquoi en alternative à l'hypothèse de sol plat, l'hypothèse de scène frontale, permettant de placer des points à suivre dans toute l'image, est également considérée.

Pour réaliser le trim automatique ou le vol stationnaire, il n'est pas nécessaire de fournir au système une estimation de la vitesse de l'aéronef. En effet, d'une part, le télémètre fournit une estimation de la vitesse selon la verticale et un dispositif spécifique d'asservissement en hauteur utilise cette information. D'autre part, les commandes directionnelles dans le plan horizontal de l'aéronef étant au nombre de huit (avant/arrière, droite/gauche soient huit combinaisons), une estimation de la direction de la translation dans le plan horizontal, parmi les huit possibilités, suffit. Ainsi, à partir de l'estimation de la translation (tx, ty, tz) décrite précédemment, on choisit pour direction du déplacement dans le plan horizontal la direction la plus proche de (tx, ty) parmi les huit directions, seulement si la norme de la translation (tx, ty) est significative, c'est-à-dire supérieure à un seuil S de quelques millimètres.

Enfin, pour limiter les mesures aberrantes rendues par la méthode, on ne fournit de mesures que si le nombre de points d'intérêts suivis avec succès entre deux images est strictement supérieur à deux. De plus, si la direction estimée est différente de la précédente d'un angle supérieur ou égal à $2\pi/3$, la mesure n'est pas considérée.

La figure 12 est un diagramme résumant le calcul de la vitesse de l'aéronef.

On notera enfin que le calcul de la translation par le procédé que l'on vient de décrire est particulièrement simple et rapide dans la mesure où, d'une part, il n'est pas nécessaire d'estimer la structure de la scène et, d'autre part, le calcul repose sur des formules fermées.

**Revendications**

1. Procédé de pilotage avec stabilisation automatique en vol stationnaire d'un drone à voilure tournante, comprenant des étapes consistant à :

   - équiper le drone d'un télémètre et d'une caméra vidéo ;
   - acquérir l'altitude du drone par rapport au sol au moyen du télémètre ;
   - acquérir la vitesse horizontale du drone ; et
   - stabiliser automatiquement le drone en vol stationnaire par :

     · asservissement de la force de poussée verticale du drone de manière à stabiliser l'altitude acquise par le télémètre, et
     · asservissement de la force de poussée horizontale du drone de manière à annuler la vitesse horizontale, procédé *caractérisé en ce que* :

   - la caméra vidéo est une caméra à visée frontale pointant vers l'avant du drone, et
   - la vitesse horizontale du drone est acquise à partir d'une pluralité d'images vidéo saisies par ladite caméra à visée frontale.

2. Procédé de pilotage de drone avec stabilisation automatique selon la revendication 1, **caractérisé en ce qu'**il comprend en outre des opérations consistant à :

- définir des fonctions élémentaires de pilotage, chaque fonction élémentaire de pilotage étant apte à déterminer des paramètres de vol à exécuter par un ensemble d'actionneurs dudit drone de manière à réaliser ladite fonction élémentaire de pilotage ;
- fournir à un utilisateur des moyens d'activation desdites fonctions élémentaires de pilotage ; et
- pour l'utilisateur, piloter le drone en actionnant lesdits moyens d'activation des fonctions élémentaires de pilotage, l'absence d'activation d'une fonction quelconque plaçant automatiquement le drone en vol stationnaire stabilisé.

3. Procédé de pilotage de drone avec stabilisation automatique selon la revendication 2, dans lequel lesdites fonctions élémentaires de pilotage comprennent les actions suivantes : monter ; descendre ; tourner à droite ; tourner à gauche ; avancer ; reculer.

4. Procédé de pilotage de drone avec stabilisation automatique selon la revendication 3, dans lequel lesdites fonctions élémentaires de pilotage comprennent également : la translation horizontale gauche ; la translation horizontale droite.

5. Procédé de pilotage de drone avec stabilisation automatique selon la revendication 2, dans lequel lesdits moyens d'activation sont constitués par des touches d'un boîtier de pilotage.

6. Procédé de pilotage de drone avec stabilisation automatique selon la revendication 2, dans lequel lesdits moyens d'activation sont constitués par des tracés d'un stylet sur une surface sensible d'un boîtier de pilotage.

7. Procédé de pilotage de drone avec stabilisation automatique selon la revendication 2, dans lequel lesdits moyens d'activation sont des moyens multi-actions aptes à enclencher, régler et stopper les fonctions élémentaires de pilotage associées.

8. Procédé de pilotage de drone avec stabilisation automatique selon la revendication 2, dans lequel lesdits moyens d'activation comprennent également des moyens d'activation de séquences automatiques.

9. Procédé de pilotage de drone avec stabilisation automatique selon la revendication 8, dans lequel lesdites séquences automatiques comprennent le décollage et l'atterrissage du drone.

10. Drone à voilure tournante, comportant :

- un télémètre et une caméra vidéo ;
- des moyens pour acquérir l'altitude du drone par rapport au sol au moyen du télémètre ;
- des moyens pour acquérir la vitesse horizontale du drone ; et
- un système de stabilisation automatique en vol stationnaire, comprenant :

· des moyens d'asservissement de la force de poussée verticale du drone de manière à stabiliser l'altitude acquise par le télémètre, et
· des moyens d'asservissement de la force de poussée horizontale du drone de manière à annuler la vitesse horizontale,
drone *caractérisé en ce que* :

- la caméra vidéo est une caméra à visée frontale pointant vers l'avant du drone, et
- les moyens pour acquérir la vitesse horizontale du drone sont des moyens pour acquérir cette vitesse à partir d'une pluralité d'images vidéo saisies par ladite caméra à visée frontale.

11. Ensemble de pilotage, **caractérisé en ce qu'**il comporte :

- un drone à voilure tournante selon la revendication 10 ; et
- un boîtier de pilotage comprenant des moyens d'activation de fonctions élémentaires de pilotage,
chaque fonction élémentaire de pilotage étant apte à déterminer des paramètres de vol à exécuter par un ensemble d'actionneurs dudit drone de manière à réaliser ladite fonction élémentaire de pilotage,
et l'absence d'activation d'une fonction quelconque plaçant automatiquement le drone en vol stationnaire stabilisé au moyen du système de stabilisation automatique en vol stationnaire du drone.

**12.** Boîtier de pilotage d'un drone à voilure tournante selon la revendication 10, **caractérisé en ce que** ledit boîtier de pilotage comprend des moyens d'activation de fonctions élémentaires de pilotage,
chaque fonction élémentaire de pilotage étant apte à déterminer des paramètres de vol à exécuter par un ensemble d'actionneurs dudit drone de manière à réaliser ladite fonction élémentaire de pilotage,
et l'absence d'activation d'une fonction quelconque plaçant automatiquement le drone en vol stationnaire stabilisé.


**Patentansprüche**

**1.** Verfahren zur Lagesteuerung mit automatischer Stabilisierung im stationären Flug einer Drehflügel-Drohne, das die Schritte umfasst, die darin bestehen:

- die Drohne mit einem Entfernungsmesser und einer Videokamera auszurüsten;
- die Höhe der Drohne in Bezug auf den Boden mittels des Entfernungsmessers zu erfassen;
- die Horizontalgeschwindigkeit der Drohne zu erfassen; und
- die Drohne im stationären Flug automatisch zu stabilisieren durch:
- Regeln der vertikalen Schubkraft der Drohne in der Weise, dass die durch den Entfernungsmesser erfasste Höhe stabilisiert wird, und
- Regeln der horizontalen Schubkraft in der Weise, dass die Horizontalgeschwindigkeit zu null gemacht wird,

wobei das Verfahren **dadurch gekennzeichnet ist dass**:

- die Videokamera eine Frontrichtungskamera ist, die in den Bereich vor der Drohne zeigt, und
- die Horizontalgeschwindigkeit der Drohne anhand mehrerer Videobilder erfasst wird, die von der Frontrichtungskamera aufgenommen werden.

**2.** Verfahren zur Lagesteuerung einer Drohne mit automatischer Stabilisierung nach Anspruch 1, **dadurch gekennzeichnet, dass** es außerdem die Operationen umfasst, die darin bestehen:

- elementare Lagesteuerungsfunktionen zu definieren, wobei jede elementare Lagesteuerungsfunktion Flugparameter bestimmen kann, die von einer Gesamtheit von Aktoren der Drohne auszuführen sind, derart, dass die elementare Lagesteuerungsfunktion verwirklicht wird;
- einem Anwender Mittel zum Aktivieren der elementaren Lagesteuerungsfunktionen bereitzustellen; und
- für den Anwender die Drohne durch Betätigen der Mittel zum Aktivieren der elementaren Lagesteuerungsfunktionen zu steuern, wobei das Fehlen der Aktivierung einer beliebigen Funktion die Drohne automatisch in den stabilisierten stationierten Flug versetzt.

**3.** Verfahren zur Lagesteuerung einer Drohne mit automatischer Stabilisierung nach Anspruch 2, wobei die elementaren Lagesteuerungsfunktionen die folgenden Aktionen umfassen: Steigen; Sinken; Drehen nach rechts; Drehen nach links; Vorwärtsbewegen; Rückwärtsbewegen.

**4.** Verfahren zur Lagesteuerung einer Drohne mit automatischer Stabilisierung nach Anspruch 3, wobei die elementaren Lagesteuerungsfunktionen außerdem umfassen: translatorische horizontale Bewegung nach links; translatorische horizontale Bewegung nach rechts.

**5.** Verfahren zur Lagesteuerung einer Drohne mit automatischer Stabilisierung nach Anspruch 2, wobei die Aktivierungsmittel durch Tasten eines Lagesteuerungsgehäuses gebildet sind.

**6.** Verfahren zur Lagesteuerung einer Drohne mit automatischer Stabilisierung nach Anspruch 2, wobei die Aktivierungsmittel durch Bahnen eines Stiletts auf einer empfindlichen Oberfläche eines Lagesteuerungsgehäuses gebildet sind.

**7.** Verfahren zur Lagesteuerung einer Drohne mit automatischer Stabilisierung nach Anspruch 2, wobei die Aktivierungsmittel Multiaktionsmittel sind, die die zugeordneten elementaren Lagesteuerungsfunktionen auslösen, steuern und anhalten können.

**8.** Verfahren zur Lagesteuerung einer Drohne mit automatischer Stabilisierung nach Anspruch 2, wobei die Aktivierungsmittel außerdem Mittel zum Aktivieren automatischer Abläufe umfassen.

9. Verfahren zur Lagesteuerung einer Drohne mit automatischer Stabilisierung nach Anspruch 8, wobei die automatischen Abläufe das Abheben und Landen der Drohne umfassen.

10. Drehflügel-Drohne, die Folgendes umfasst:

- einen Entfernungsmesser und eine Videokamera;
- Mittel, um die Höhe der Drohne in Bezug auf den Boden mittels des Entfernungsmessers zu erfassen;
- Mittel, um die Horizontalgeschwindigkeit der Drohne zu erfassen; und
- ein System zur automatischen Stabilisierung im stationären Flug, das Folgendes umfasst:
- Mittel zum Regeln der vertikalen Schubkraft der Drohne in der Weise, dass die von dem Entfernungsmesser erfasste Höhe stabilisiert wird, und
- Mittel zum Regeln der horizontalen Schubkraft der Drohne in der Weise, dass die Horizontalgeschwindigkeit zu null gemacht wird,

wobei die Drohne **dadurch gekennzeichnet ist, dass**:

- die Videokamera eine Frontrichtungskamera ist, die in den Bereich vor der Drohne zeigt, und
- die Mittel zum Erfassen der Horizontalgeschwindigkeit der Drohne Mittel sind, um diese Geschwindigkeit anhand mehrerer Videobilder zu erfassen, die von der Frontrichtungskamera aufgenommen werden.

11. Lagesteuerungsanordnung, **dadurch gekennzeichnet, dass** sie Folgendes umfasst:

- eine Drehflügel-Drohne nach Anspruch 10; und
- ein Lagesteuerungsgehäuse, das Mittel zum Aktivieren elementarer Lagesteuerungsfunktionen enthält, wobei jede elementare Lagesteuerungsfunktion Flugparameter bestimmen kann, die von einer Gesamtheit von Aktoren der Drohne auszuführen sind, derart, dass die elementare Lagesteuerungsfunktion verwirklicht wird, und das Fehlen der Aktivierung einer beliebigen Funktion die Drohne mittels des Systems zur automatischen Stabilisierung im stationären Flug der Drohne automatisch in den stabilisierten stationären Flug versetzt.

12. Lagesteuerungsgehäuse einer Drehflügel-Drohne nach Anspruch 10, **dadurch gekennzeichnet, dass** das Lagesteuerungsgehäuse Mittel zum Aktivieren elementarer Lagesteuerungsfunktionen enthält, wobei jede elementare Lagesteuerungsfunktion Flugparameter bestimmen kann, die von einer Gesamtheit von Aktoren der Drohne auszuführen sind, derart, dass die elementare Lagesteuerungsfunktion verwirklicht wird, und wobei das Fehlen der Aktivierung einer beliebigen Funktion die Drohne automatisch in den stabilisierten stationären Flug versetzt.

**Claims**

1. A method for piloting a rotary-wing drone with an automatic stabilization in hovering flight, comprising the steps of:

- equipping the drone with a range finder and a video camera;
- acquiring the altitude of the drone relative to the ground by means of the range finder;
- acquiring the horizontal speed of the drone; and
- automatically stabilizing the drone in hovering flight by:

. servo-controlling the vertical thrust force of the drone so as to stabilize the altitude acquired by the range finder, and
. servo-controlling the horizontal thrust force of the drone so as to zero the horizontal speed,

the method being **characterized in that**:

- the video camera is a front view camera pointing forward of the drone, and
- the horizontal speed of the drone is acquired from a plurality of video images taken by said front view camera.

2. The method for piloting a drone with an automatic stabilization according to claim 1, **characterized in that** it further comprises operations of:

- defining elementary piloting functions, wherein each elementary piloting function is adapted to determine flight parameters to be executed by a set of actuators of said drone so as to perform said elementary piloting function;
- providing a user with means for activating said elementary piloting functions; and
- for the user, piloting the drone by actuating said means for activating the elementary piloting functions, wherein the absence of activation of any function places automatically the drone in stabilized hovering flight.

3. The method for piloting a drone with an automatic stabilization according to claim 2, wherein said elementary piloting functions comprise the following actions : move up; move down; turn to the right; turn to the left; move forward; move backward.

4. The method for piloting a drone with an automatic stabilization according to claim 3, wherein said elementary piloting functions also comprise: horizontal translation to the left; horizontal translation to the right.

5. The method for piloting a drone with an automatic stabilization according to claim 2, wherein said activation means are consisted by keys of a piloting unit.

6. The method for piloting a drone with an automatic stabilization according to claim 2, wherein said activation means are consisted by drawings with a stylus on a sensitive surface of a piloting unit.

7. The method for piloting a drone with an automatic stabilization according to claim 2, wherein said activation means are multi-action means adapted to trigger, control and stop the associated elementary piloting functions.

8. The method for piloting a drone with an automatic stabilization according to claim 2, wherein said activation means also comprise means for activating automatic sequences.

9. The method for piloting a drone with an automatic stabilization according to claim 8, wherein said automatic sequences comprise the takeoff and the landing of the drone.

10. A rotary-wing drone, including:

   - a range finder and a video camera;
   - means for acquiring the altitude of the drone relative to the ground by means of the range finder;
   - means for acquiring the horizontal speed of the drone; and
   - a system of automatic stabilization in hovering flight, comprising:

      . means for servo-controlling the vertical thrust force of the drone so as to stabilize the altitude acquired by the range finder, and
      . means for servo-controlling the horizontal thrust force of the drone so as to zero the horizontal speed,

   the drone being **characterized in that**:

      - the video camera is a front view camera pointing forward of the drone, and
      - the means for acquiring the horizontal speed of the drone are means for acquiring this speed from a plurality of video images taken by said front view camera.

11. A piloting device, **characterized in that** it includes:

   - a rotary-wing drone according to claim 10; and
   - a piloting unit comprising means for activating elementary piloting functions,
   wherein each elementary piloting function is adapted to determine flight parameters to be executed by a set of actuators of said drone so as to perform said elementary piloting function,
   and the absence of activation of any function places automatically the drone in stabilized hovering flight by means of the system of automatic stabilization of the drone in hovering flight.

12. A piloting unit for piloting a rotary-wing drone according to claim 10, **characterized in that** said piloting unit comprises means for activating elementary piloting functions,
   wherein each elementary piloting function is adapted to determine flight parameters to be executed by a set of actuators of said drone so as to perform said elementary piloting function,

and the absence of activation of any function places automatically the drone in stabilized hovering flight.

Activation

Mesures par video → Translations Tx, Ty, Vision → Asservissement pour le Trim automatique → Trims → Attitudes commandees =0 → Anglesinertiels → Consigne → Asservissement en angle et en altitude de l'aéronef → Commandes moteurs

Unite de Mesures Inertielles

Pilote / Autopilote

Altitude commandée → Consigne

Altitude télémetre

**FIG. 1**

Activation autopilote

Vision → Passe-bas → Timer → Ki → ∫ → Kp → Trim

**FIG. 2**

Vision → Passe-bas → Ki → ∫ → Kp → Trim

**FIG. 3**

Altitude
Mesurée

$$\boxed{Kd}$$

$$\boxed{\dfrac{dz}{dt}}$$

Altitude
commandée

⊗

$$\boxed{Kp}$$

⊗

Commande gaz
moteurs

Gaz décollage

**FIG. 4**

Angle
commandé

⊗

$$\boxed{K\theta}$$

⊗

$$\boxed{K\omega}$$

Commande
moteurs
avant/arrière

Angle
mesuré

Vitesse angulaire
mesurée

**FIG. 5**

$$\boxed{Ki}$$

$$\boxed{\int}$$

Orientation de
cap
commandée

⊗

$$\boxed{Kp}$$

⊗

Commande
moteurs de cap

Vitesse
angulaire

**FIG. 7**

FIG. 6

FIG. 8

```
┌──────────────┐     ╱╲              O    ┌──────────────┐
│ Recherche de │──▶ ╱Si suffisamment╲────▶│    Point     │
│caractéristiques│  ╲de caractéristiques╱  │  d'intérêt   │
└──────────────┘    ╲sont trouvées ╱       │  étiqueté    │
                      ╲╱                     │  « actif »   │
                       │ N                   └──────────────┘
                       ▼
                 ┌──────────┐
                 │  Point   │
                 │ d'intérêt│
                 │ étiqueté │
                 │«inactif» │
                 └──────────┘
```

**FIG. 9**

```
 ⬭N mouvements de     ⬭attitude de l'aéronef  ⬭translation en
 points d'intérêt      fournie par la          z fournie par le
 entre les images⬭     centrale inertielle⬭    télémètre⬭
        └──────────────────┬──────────────────┘
                           ▼
              ┌────────────────────────────┐
              │ Calcul de la translation(tx,ty)│
              │   entre les deux instants   │
              │    d'acquisition d'image    │
              └────────────────────────────┘
                           │
                           ▼
┌──────────────┐  N      ╱╲
│Aucun mouvement│◀──────╱ Si: ╲
│   détecté    │        ╲‖(tx,ty)‖>S╱
└──────────────┘         ╲╱
                          │ O
                          ▼
        ┌─────────────────────────────────┐
        │      - Mouvement détecté         │
        │   - Calcul de l'angle α de       │
        │  la direction du mouvement       │
        │       arrondi à π/4:             │
        │ -π/8+kπ/4< α <=π/8+kπ/4          │
        └─────────────────────────────────┘
```

**FIG. 12**

Image
suivante →

Pour chaque point
d'intérêt

Si point
d'intérêt
« actif »   N →

O

Recherche de la
nouvelle
position

Si la
nouvelle position
est trouvée   N →

O

Stockage du
mouvement
du point d'intérêt

Recentrage
du point
d'intérêt   ← O   Si le point
d'intérêt s'est éloigné
de sa position issue de la
distribution des
centres

Initialisation du
point d'intérêt

FIG. 10

Première image courante

Image courante suivante

Réduction de
l'image
courante

Distribution
dans
l'image réduite

Distribution
dans
l'image
courante

Initialisation des
points d'intérêt
dans
l'image réduite

Initialisation des
points d'intérêt
dans
l'image courante

Suivi des points
d'intérêt
actifs dans l'image
réduite

Prédiction
des déplacements

Suivi des points d'intérêt
actifs dans l'image
courante

Stockage des mouvements
des points d'intérêt dans
l'image courante

N

Pas de calcul
de
la vitesse

Si le nombre de
points d'intérêt
fournissant un
mouvement est > 2

O

Calcul de la vitesse de
l'aéronef avec les points
d'intérêt suivis, les mesures
des gyromètres et du
télémètre

FIG. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0187446 A1

- US 20050165517 A1